Europäisches Patentamt

European Patent Office

Office européen des brevets

(11) Veröffentlichungsnummer: **0 331 957**

**A2**

## (12) EUROPÄISCHE PATENTANMELDUNG

(21) Anmeldenummer: **89102897.9**

(22) Anmeldetag: **20.02.89**

(51) Int. Cl.⁴: **B01D 23/10 , B01D 23/24**

(30) Priorität: **08.03.88 HU 112088**

(43) Veröffentlichungstag der Anmeldung:
**13.09.89 Patentblatt 89/37**

(84) Benannte Vertragsstaaten:
**AT BE CH DE FR GB IT LI LU NL SE**

(71) Anmelder: **DUNAI VASMÜ**
**Pf. 110**
**H-2401 Dunaujváros(HU)**

Anmelder: **CSONGRAD MEGYEI VIZ- ES**
**CSATORNAMU VALLALAT**
**Postfach 4**
**Szentes(HU)**

(72) Erfinder: **Czellér, Béla**
**Majus 1.u.5**
**Dunaujvaros(HU)**

Erfinder: **Kozak, Janos, Dipl.-Ing.**
**Sima F. u. 9.**
**Szentes(HU)**
Erfinder: **Kucsera, Gabor**
**Bartok B. u. 9.**
**Szentes(HU)**
Erfinder: **Danyi, Istvan**
**Harsfa u. 154**
**Csongrad(HU)**
Erfinder: **Kurucz, Istvan**
**Matyas K. u. 13.**
**Csongrad(HU)**
Erfinder: **Nadudvari, Jozsef**
**Pava u. 13/3**
**Szentes(HU)**

(74) Vertreter: **Patentanwälte Viering & Jentschura**
**Steinsdorfstrasse 6**
**D-8000 München 22(DE)**

(54) **Anlage zur kontinuierlichen Flüssigkeitsbehandlung.**

(57) Anlage zur kontinuierlichen Flüssigkeitsbehandlung, mit einem zylindrischen Behälter und einem in Zellen aufgeteilten und eine Filterfüllung enthaltenden umlaufenden Filterkorb, wobei der Behälter mit Flüssigkeitszuleitungs- und Flüssigkeitsableitungsrohren sowie einem Spülwasserableitungsrohr versehen ist. Erfindungsgemäß ist der Behälter (1) ein unter Druck stehender Behälter (1), die Zellen (8) des Filterkorbes sind seitlich und von oben durch Bleche (Platten) begrenzte Räume, die unten durch mit Öffnungen versehene Trägerelemente (13) abgeschlossen werden, die Höhe der Filterfüllung (12) ist kleiner als die Höhe der Zellen (8) und die Zellen (8) sind über den umlaufenden Verteilerkopf (4) mit dem zentralen Flüssigkeitszuleitungsrohr (2) bzw. dem Spülwasserableitungsrohr (18) auf die Weise verbunden, daß der umlaufende Verteilerkopf (4) aus dem an dem zentralen Flüssigkeitszuleitungsrohr (2) befestigten feststehenden unteren Teil (5) und dem sich an diesen abgedichtet anfügenden umlaufenden oberen Teil (6) besteht, wobei im unteren Teil in einer der Anzahl der Zellen (8) entsprechenden gleichen Teilung Öffnungen vorgesehen sind, und im oberen Teil (6) mit diesen in der Grundstellung bzw. bei einer Verdrehung um eine Teilung in Deckung befindliche, sich an die an die obere Platte der Zellen (8) angeschlossenen Flüssigkeitsverteilerrohre (7) anschließende Öffnungen vorgesehen sind, wobei zumindest ein Abschnitt des Spülwasserableitungsrohres (18) im Inneren des zentralen Flüssigkeitszuleitungsrohres (2) geführt und an eine Öffnung des unteren Teiles (5) des umlaufenden Verteilerkopfes (4) von innen angeschlossen ist.

Fig. 1

## ANLAGE ZUR KONTINUIERLICHEN FLÜSSIGKEITSBEHANDLUNG

Gegenstand der Erfindung ist eine kontinuierlich arbeitende Flüssigkeitsbehandlungsanlage, die einen zylindrischen Behälter und einen in Zellen aufgeteilten und das Filtermaterial enthaltenden umlaufenden Filterkorb aufweist, wobei der Behälter mit einer Flüssigkeitszuleitung und Ableitung sowie mit einer Rückspülleitung versehen ist.

Bekanntlich werden im Verlaufe des Wasserfilterns die im Wasser befindlichen Schwebestoffe entfernt. Dazu werden traditionell Sandfilter verwendet, deren Arbeitsweise im wesentlichen ähnlich der in der Natur vorsich gehenden Filterung ist. Die in den Wasserfiltern befindliche feinkörnige Schicht wird jedoch nach einer gewissen Zeit verunreinigt und muß deshalb regeneriert werden.

Die Regenerierung erfolgt mit Hilfe von reinem Wasser, das in der Filtrierungsrichtung entgegengesetzter Richtung zum Strömen gebracnt wird, wobei gegebenenfalls die Filterschicht durch Luft oder ein sonstiges Gas aufgelockert wird.

Die Regenerierung kann aber nur durchgeführt werden, wenn der Filterungsprozeß unterbrochen wird. Dementsprechend kann ein kontinuierliches Filtern nur verwirklicht werden, wenn mehrere selbständige Filteranlagen zum Einsatz gelangen und während der Regenerierung der einen Filteranlage die andere bzw. mehrere andere Anlagen die Filterung fortsetzen.

Wegen der zufolge der zunehmenden Verunreinigung allmählich rückläufigen Filtergeschwindigkeit und der dadurch bedingten rückläufigen spezifischen Leistung müssen die Filteranlagen ziemlich groß bemessen werden, was zu einer wesentlichen Erhöhung des Kostenaufwandes für das Filterverfanren führt.

Eine weitere Schwierigkeit bereitet der Umstand, daß im Interesse der Erhöhung der Effektivität der Filterung nötigenfalls mehrere Filterschichten eingesetzt werden, weiterhin daß zur Erfüllung der unterschiedlichen hinsichtlich der Wasserbehandlung bestehenden Anforderungen über das Entfernen der schwebenden Feststoffverunreinigungen hinausgehend auch eine chemische Filterung, z. B. eine Entsäuerung, Entgasung, Entziehen von Eisen, Entfernen von Stickstoff und/oder Phosphor sowie Schwermetallsalzen, eine Desodorierung usw. ebenfalls erfolgt. Auf diese Weise wird das einfache Filtrationsverfahren im allgemeinen mit anderen Wasserbehandlungsvorgängen kombiniert, was andererseits die Anordnung weiterer Filter bzw. Behandlungsgefäße erforderlich macht und die Aufwendungen für die schon im Übrigen teure periodisch arbeitende Filtrierungstechnologie weiter erhöht. Hierbei werden zum Sicherstellen des kontinuierlichen Betriebes mehrere Koagulations- bzw.

Chemikalienkonditionierungsbehälter, weiterhin verschiedene Filtermaterialien und Korngrößen aufweisende Filter benötigt.

Zur Minderung der vorstehend aufgeführten Schwierigkeiten wurden Filtereinrichtungen entwikkelt, mit denen eine kontinuierliche Reinigung vorgenommen werden kann. Bekannt ist zum Beipsiel ein Apparat, in dem eine sich langsamdrehende Düse eingesetzt und mit dieser das Filterelement zurückgewachsen wird.

Ein anderes System enthält einen Kratzer, der, in den Spalten zwischen den Filterscheiben eingesetzt, die sich anhäufenden Verunreinigungen herauszieht.

In derartigen kontinuierlich arbeitenden Filteranlagen gelangen dann die entfernten Verunreinigungen in einen Sammelraum, von wo sie dann in gewissen Zeitabständen entfernt werden.

Die vorstehend genannten Vorrichtungen haben in erster Linie den Nachteil, daß das Ausmaß der Filterung auf die Größe der Spalte zwischen den Drahtspiralen bzw. Filterscheiben beschränkt wird.

Auf ähnliche Weise funktionieren die mit herkömmlicher Regenerierung arbeitenden, mit Siebgewebe oder verschiedenen porösen Materialien ausgestatteten Filtereinrichtungen. Bekanntlich sind auch mit auswechselbaren Filtereinsätzen bzw. Patronen versehene Filtereinrichtungen.

Bekannt ist auch eine mit kontinuierlicher Spülung arbeitende Wasserfiltereinrichtung, die ein zylindrisches Gehäuse, einen in diesem abgedichtet gelagerten umlaufenden Filterkorb, in der Gehäusemitte einen Rohwasserzulaufstutzen sowie einen in den Bodenteil des Gehäuses hineinreichenden Reinwasserausleitstutzen aufweist, wobei der Filterkorb oben geschlossen, unten hingegen abgedichtet in die Öffnung des Ablaufstutzens eingefügt ist. An den Mantel des Filterkorbes sind Filterelemente montiert, in einer zur Ebene des Einlauf-und des Austrittstutzens senkrechten Ebene ist hingegen ein sich an den Filterkorb anfügender, in der Innenwand des Gehäuses ausgebildeter Hohlraum vorgesehen und in den Hohlraum reicht eine durch die Gehäusewand führende Austrittsöffnung. Eine derartige Einrichtung wird durch die HU-A-172 006 beschrieben, wobei die Filterelemente das Filtermaterial aufnehmende, an ihren beiden einander gegenüberliegenden Seitenflächen durch perforierte Platten bzw. Siebgewebe ausgebildete Prismen sind, die sich an den Filterkorb anfügende Montageflansche aufweisen. Bei einer vorteilhaften Ausführungsform ist die äußere Seitenfläche des Filterelementes dem Filterkorbradius entsprechend bogenförmig ausgebildet Das Filtermaterial im Filterkorb kann Sand, Split, Aktivkohle, Porzellansplit oder deren beliebiges Gemisch sein.

Auf die Weiterentwicklung dieser Einrichtung bezieht sich die HU-A-184 550. Gegenstand dieser Patentschrift ist eine Wasserbehandlungseinrichtung, die ein zylindrisches Gehäuse und einen umlaufenden Filterkorb aufweist, wobei das Gehäuse mit einer Rohwasserzuleitung und einem Reinwasserableitstutzen, der umlaufende Filterkorb hingegen mit einer Rückspülkammer versehen ist Neuerungsgemäß ist in dem zylindrischen Gehäuse ein sich an den Rohwassereintrittstutzen anschließender ringförmiger Koagulationsraum ausgebildet und koaxial zu dem Koagulationsraum sowie zueinander gelangen mehrere laufende Filterkörbe zur Verwendung. Hierbei ist der Apparat mit mindestens einem Gaszuleitungsrohr ausgestattet.

Die im Apparat verwendeten Filterkörbe können im Inneren voreinander oder übereinander angeordnet sein. In den Filterkörben sind zweckdienlicherweise mehrere voneinander getrennte, mit einer selbständigen Rückspülkammer versehene Filterschichten angeordnet, wobei die Filterschichten vorteilhafterweise zwischen zylinderförmigen perforierten Trennwänden vorgesehen sind.

In der Praxis erwies sich als grundlegender Nachteil beider letztgenannten Vorrichtungen die Tatsache, daß das in den umlaufenden Filterkörben dicht vorgesehene Filtermaterial nicht entsprechend zurückgewaschen und so die Regenerierung nicht verwirklicht werden kann. Dementsprechend verstopf die Filtereinrichtung innerhalb einer kurzen Zeit, ihr Widerstand steigt an und die Filteraufgabe kann nicht mehr erfüllt werden.

Die vorgenannten Konstruktionen enthalten außerdem starr eingespannte umlaufende Teile; demzufolge führen aus Fertigungsungenauigkeiten herrührende Fehler Spannungen in der Konstruktion und kurzfristig deren Verschleiß herbei.

Ein weiterer Nachteil besteht darin, daß die zum Rückspülen erforderliche Abdichtung auf der Filtermantelfläche vorgesehen werden muß, was hingegen wegen fertigungstechnologischen Gründen nicht mit der entsprechenden Genauigkeit erfolgen kann. So treten im Verlaufe der Arbeit wesentliche Spaltverluste auf, die die Arbeitsweise der Einrichtung in wesentlichem Ausmaße stören.

Zweck der vorliegender Erfindung ist es, eine von den aufgezählten Nachteilen freie derartige Mehrzweck-Wasserbehandlungsanlage zu schaffen, die sich zur mehrfache Forderungen erfüllenden Behandlung von Flüssigkeiten (Filterung, Enrfernen von Eisn und Entarsenisierung. Wasserenthärtung) eignet, mit Sicherheit regeneriert werden kann und deren Konstruktion einen zuverlässigen Betrieb sicherstellt.

Die gestellte Aufgabe wird erfindungsgemäß dadurch gelöst, daß die Zellen des Filterkorbes von der Seite und von oben durch Bleche abgegrenzte Räume sind, die unten durch ein mit Öffnungen versehenes Trägerelement abgeschlossen werden. Die Höhe der das Filtermaterial bildenden Füllung ist kleiner als die Höhe der Zellen und die Zellen sind über einen umlaufenden Verteilerkopf mit dem zentralen Flüssigkeitszuleitrohr bzw. mit der Rückspülleitung auf die Weise verbunden, daß der umlaufende Verteilerkopf aus einem an dem zentralen Zuleitungsrohr befestigten feststehenden und einen sich an diesen abgedichtet anfügenden umlaufenden Teil besteht, wobei an dem feststehenden Teil Öffnungen in einer der Zahl der Zellen entsprechenden gleichen Teilung vorgesehen sind und an dem umlaufenden Teil mit den Öffnungen in der Grundstellung bzw. im Falle einer der Teilung entsprechenden Verdrehung in Deckung befindliche, sich an die an die obere Abschlußplatte der Zellen angeschlossenen Zuleitungsrohre anschließende Öffnungen vorgesehen sind. Die Rückspülleitung ist mindestens mit einem Abschnitt im Inneren des zentralen Flüssigkeitszuleitungsrohres angeordnet und an eine Öffnung des feststehenden Teiles des umlaufenden Verteilerkopfes von innen angeschlossen.

Bei einer vorteilhaften Ausführungsform des umlaufenden Verteilerkopfes der erfindungsgemäßen Anlage bilden der untere und der obere Teil einen zusammengeschliffenen Kegel, bei der anderen Form eine Scheibe mit dazwischengelegtem Kunststoffdichtungselement, wobei der obere Teil über eine Kupplung an den oben am Behälter befindlichen Elektromotor angeschlossen ist.

Der Behälter kann gegebenenfalls auch mit einem das Behandlungsmaterial zuleitenden Rohr versehen sein, das der Rückspülleitung ähnlich mindestens mit einem Abschnitt im Inneren der zentralen Flüssigkeitszuleitungsröhre angeordnet und an eine Öffnung des feststehenden Teiles des umlaufenden Verteilerkopfes von innen angeschlossen ist.

Der obere Teil der Zellen des Filterkorbes weist vorzugsweise einen weiteren Querschnitt als der untere Teil auf, um ein Zurückwaschen der Füllung zu vernindern. Die Füllung selbst kann feinkörniger Sand oder zum Beispiel ein mehrschichtiges Filtermaterial sein

In der Rückspülleitung kann zweckdienlicherweise ein Regelventil bzw. eine Drossel eingebaut sein, die mit der durch den Behälterdruck gesteuerten Regeleinheit verbunden ist.

Nach einer anderen Variante ist in der Rückspülleitung ein eine höhere Wichte als das reine Wasser und eine niedrigere Wichte als sandiges Wasser aufweisendes Sperrelement eingebaut.

Die so ausgebildete Anlage eignet sich zur häufigen Filtermaterialrückwäsche, weshalb eine verhältnismäßig schnelle Verstopfung zulässig ist, was eine sehr schnelle Filterung sowie die Verwendung von geringen Füllungsstärken ermöglicht, wobei die geringe Füllungsstärke die Verwendung von sehr kleinen Abmessungen (Korngrößen von sogar 0.40.8 mm) aufweisenden Filterfüllungen sicherstellt. Dadurch wird die Behandlungsdauer verkürzt.

Durch Änderung der Umlaufgeschwindigkeit, der Filterungs-sowie Rückspülzeiten, der Zahl der Segmente des geteilten ringförmigen Raumes, der Größe der Filterschichtfraktion sowie der Filterungs- und Rückspülgeschwindigkeiten wird die Herstellung einer sich an die veränderlichen Forderungen der Flüssigkeitsbehandlung elastisch anpassenden Mehrzweckanlage möglich. Während eines Zyklus (eine einzige Umdrehung) kann die Behandlung und Regenerierung der Flüssigkeit verwirklicht und in Abhängigkeit von den Forderungen auch die Konditionierung der Flüssigkeit sichergestellt werden.

Die weiteren Einzelheiten der Erfindung werden anhand eines Ausführungsbeispiel mit Hilfe der Zeichnung beschrieben. In der Zeichnung zeigt:

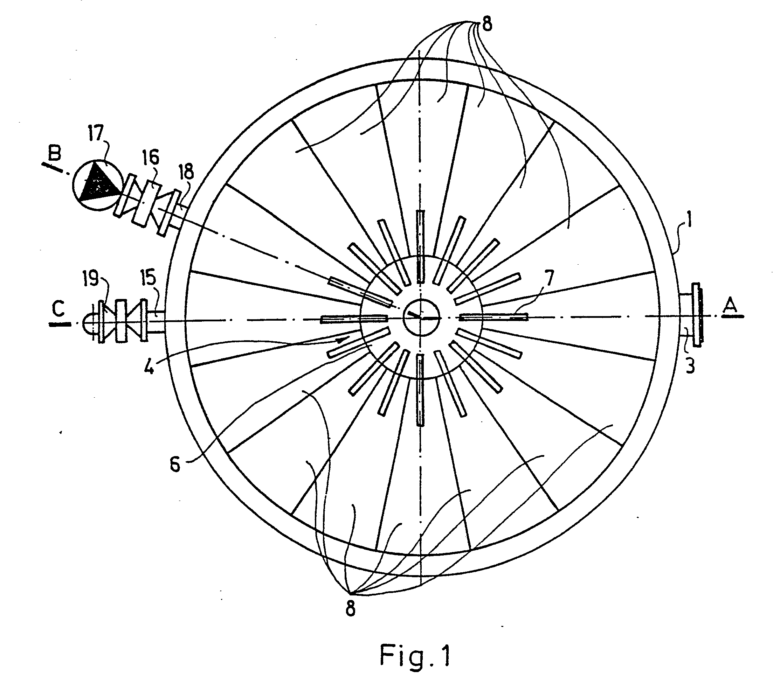

    Fig. 1 die Draufsicht eines Beispiels der Ausführung der Anlage,
    Fig. 2 den Schnitt A-B in Fig. 1 und
    Fig. 3 den Schnitt A-C in Fig. 1.

Bei dem dargestellten Ausführungsbeispiel besteht die Anlage aus dem Behälter 1, der mit einem Flüssigkeitszuleitungsrohr 2 und einem Flüssigkeitsableitungsrohr 3 versehen ist. Das Flüssigkeitszuleitungsronr 2 ist gleichzeitig auch als Trägerelement ausgebildet und an seinem oberen Teil ist der umlaufende Verteilerkopf 4 angeordnet. Der umlaufende Verteilerkopf 4 besteht aus dem feststehenden unteren Teil 5 und dem verdrehbaren oberen Teil 6. Diese sind kegelig zusammengeschliffene Bauelemente. die eine abgedichtete Verbindung sicherstellen. An die im oberen Teil 6 des umlaufenden Verteilerkopfes 4 befindlichen Öffnungen sind Flüssigkeitsverteilerrohre 7 angeschlossen und diese führen zu den ringsherum angeordneten Zellen 8. In dem unteren Teil 5 sind in einer der Anzahl der Zellen 8 entsprechenden Teilung Öffnungen vorgesehen und diese sind mit den im oberen Teil befindlichen ähnlichen Öffnungen in der Grundstellung bzw. bei ihrem Weiterschalten in Deckung. Die Zellen 8 bilden die Segmente eines ringförmigen Filterkorbes und laufen an den oberen Teil 6 des umlaufenden Verteilerkopfes 4 befestigt gemeinsam um. Der Antrieb erfolgt über die an den oberen Teil 6 angeschlossene Welle 9 und die Kupplung 10 vom Schrittgetriebe 11, das oben an dem Behälter 1 angeordnet ist. Aus den Figuren geht klar hervor, daß die Filterfüllung 12 in dem unteren einen kleineren Querschnitt aufweisenden Teil der Zellen 8 auf dem Trägerelement 13 angeordnet ist. Das Trägerelement 13 ist im Falle der vorgestellten Ausführungsform eine perforierte Platte, die Filterfüllung hingegen feinkörniger (Korngröße ca. 1 mm) Sand. Der obere Teil der Zellen 8 ist mit dem Deckel 14 abgeschlossen.

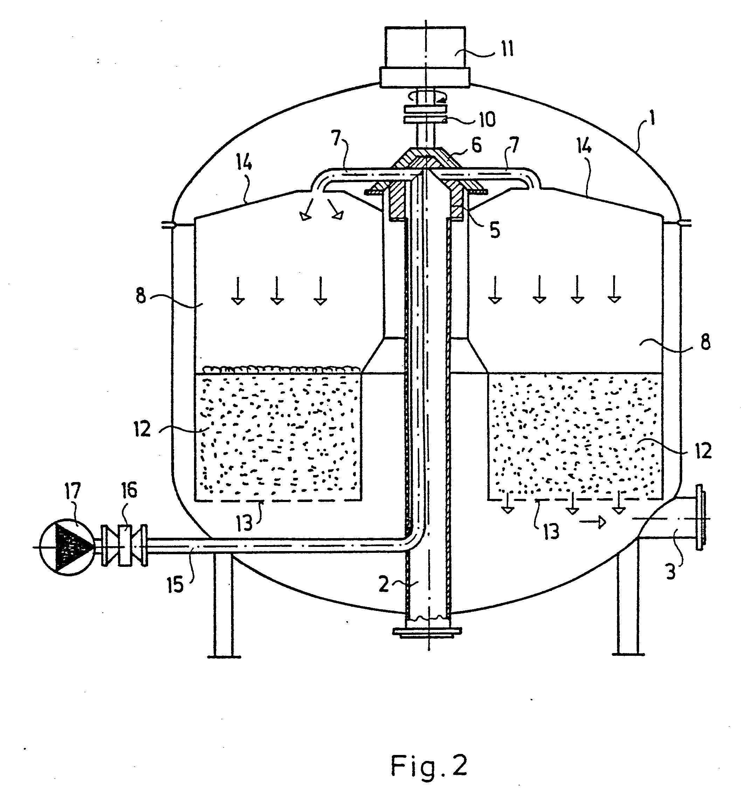

Die Anlage ist auf die in Figur 2 dargestellte Weise mit einer Rohrleitung 15 versehen, die im Inneren des Flüssigkeitszuleitungsrohres 2 angeordnet und oben an den umlaufenden Verteilerkopf 4 angeschlossen und in die über die Pumpe 16 und das Membranventil 17 die zur Flüssigkeitsbehandlung erforderlichen Konditionierstoffe in die Zelle 8 zugeführt werden können.

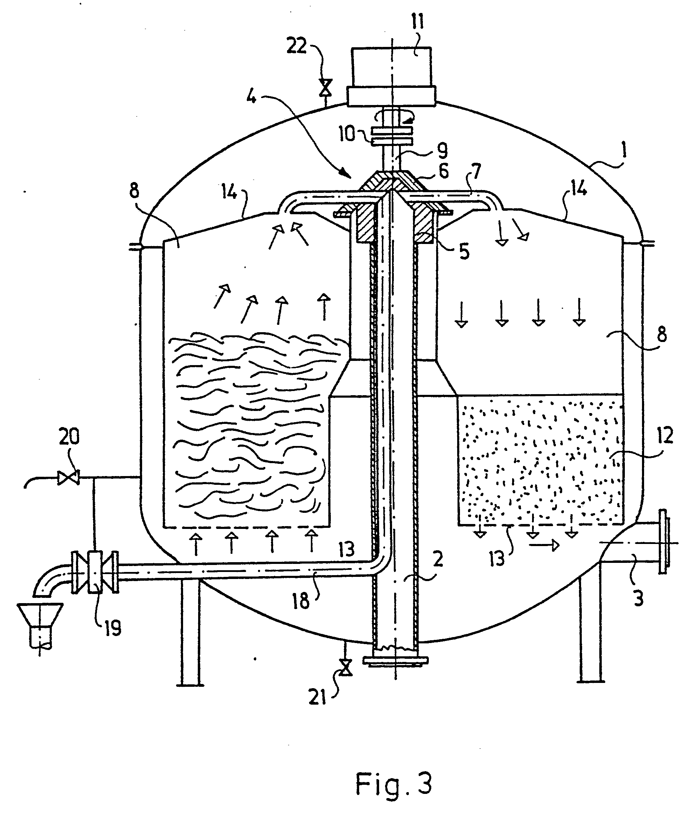

In dem in Figur 3 dargestellten anderen Segment ist das Spülwasserableitungsrohr 18 ähnlich der Rohrleitung 15 angeordnet. Dieses dient zur Ableitung des beim Rückspülen austretenden Spülwassers. In das Spülwasserableitungsrohr 18 ist das hydraulisch betätigte Membranventil 19 eingesetzt. Dieses kann mittels der durch die Drosselarmatur 20 durchströmenden Flüssigkeitsmenge verstellt werden.

Die Anlage arbeitet in folgender Weise. Die zu behandelnde Flüssigkeit gelangt durch das Zuleitungsrohr 2 in dasInnere des Behälters 1 und durch die im unteren Teil 5 und die im oberen Teil 6 des umlaufenden Verteilerkopfes 4 vorgesehenen Bohrungen sowie die Flüssigkeitsverteilerrohre 7 in die Zellen 8. Die Flüssigkeit strömt durch die Filterfüllung 12 bzw. das Trägerelement 13 und gelangt in den inneren Raum des Behälters 1, von wo es dann durch das Ableitungsrohr 3 an einen beliebigen Ort weiterbefördert werden kann.

Die Regenerierung der in den Zellen 8 befindlichen Filterfüllung 12 erfolgt in dem in Fig. 3 links dargestellten Segment. In dieser Stellung gelangt das Flüssigkeitsverteilerrohr 7 mit der Spülwasserableitung 7-6, 6-5, 5-18 in Verbindung und der im Behälter 1 herrschende Überdruck preßt die Flüssigkeit durch die Zelle 8 nach oben strömend durch das Membranventil 19 heraus. Die Strömung der Flüssigkeit hebt die Filterfüllung 12 an und ermöglicht ein Zurückspülen der angesammelten Verunreinigungen zwischen den Körnchen und von deren Oberfläche.

Damit ein Teil der Filterfüllung 12 mit dem Spülwasser zusammen aus dem oberen Teil der Zelle 8 nicht entweicht, ist diese oberhalb der Ruhehöhe der Filterfüllung 12 mit einem sich erweiternden Querschnitt ausgebildet, wie dies bereits vorstehend erwähnt wurde. Auf diese Weise verlangsamt sich die Flüssigkeitsströmung wegen sich erweiternden Querschnittes bei der Regenerierung und die Füllung gelangt nach einer gewissen Volumenzunahme ins Gleichgewicht.

Ergibt sich plötzlich eine große Druckänderung, so ernöht der Geschwindigkeitsanstieg, der andernfals ein Ausspülen der Füllung verursachen könnte, den Widerstand des hydraulisch betätigten Membranventils 19 und verhindert automatisch das Auswaschen der Filterfüllung 12. Das Membranventil 19 wird durch den Druck im oberen Raum des Behälters 1 gesteuert und seine Einstellung kann durch Änderung der durch das Drosselventil 20 strömenden Flüssigkeitsmenge vorgenonmen werden.

Die in Fig. 2 dargestellte Rohrleitung 15 ermöglicht die Verwendung von sogenanntem Konditioniermaterial zur Flüssigkeitsbehandlung. Erfordert die Flüssigkeitsbehandlung die Konditionierung, so vollführt die Anlage an der Stelle der in Fig. 2 links befindliche Zelle 8 eine Flüssigkeitsbehandlung auf die Weise, daß die Pumpe 17 über das Membranventil 16 Konditioniermaterial in den oberen Teil der Zelle 8 fördert, der in diesem Falle als Konditionierungsraum funktioniert und die Flüssigkeitsbehandlung vor dem Durchströmen durch die Filterfüllung 12 vornimmt.

Im Verlaufe des Betriebes kann das sich im Behälter 1 absetzende Spülwasser durch das Ablaßventil 21 entfernt werden. Die bei Betriebsaufnahme erforderliche Entlüftung kann mit Hilfe des am oberen Teil des Behälters 1 vorgesehenen Entlüftungsventils 22 erfolgen

Natürlich ist das angeführte Beispiel nur eine mögliche Ausführungsform der Erfindung. Ähnliche Konstruktionen können noch in zahlreichen weiteren Varianten aufgebaut werden. Das Trägerelement der Filterfüllung kann neben einem perforierten Blech zum Beipiel auch ein Sieb sein, bzw. kann die perforierte Platte gegebenenfalls mit Sandfängerelementen versehen sein. Der umlaufende Verteilerkopf kann auch von der kegeligen Ausführung abweichend, aus flachen Scheiben und zwischen denen angeordnetem Dichtungselementen bestehen. Auch die Füllung kann von dem dargestellten feinkörnigen Sandfüllungen abweichend eine mehrschichtige Füllung sein. Die Rückspülung der Filterfüllung im Verlaufe der Regenerierung kann neben der dargestellten Drosselung auch auf eine andere Weise zum Beispiel mit Hilfe eines auf der Wichtendifferenz beruhenden Strömungsbegrenzers gelöst werden. Der Vorteil desselben besteht unter anderem darin, daß im Verlaufe des Betriebes der Wasserverlust vermindert werden kann. Der größte Vorteil der Anlage besteht darin, daß sie auf dem Gebiet der Flüssigkeitsbehandlung weitläufig einsetzbar ist, einen kontinuierlichen Betrieb ermöglicht und bei geringem Platzbedarf auch ohne Hilfseinrichtungen verwendet werden kann (sie kann auch allein ohne Verdoppelung der Behandlungseinrichtungen eingebaut werden)

In der Konstruktion versehen die Bauelemente im allgemeinen mehrere Funktionen: So trägt zum Beispiel der umlaufende Verteilerkopf die Zellen und verwirklicht zugleich auch die Flüssigkeitsverteilung, wogegen die Zellen zyklisch wiederholend die Flüssigkeitsbehandlung, die Regenerierung bzw. die Konditionierung verwirklichen.

Die Anlage verfügt über eine eingebaute Füllungsfalle, die ein durch eine gewisse Druckschwankung bedingtes Ausspülen der Füllung verhindert, im Falle einer diese überschreitenden Druckschwankung hingegen eine automatische Druckkorrektur ermöglicht. Die Füllung kann auch unter Betriebsverhältnissen stabil zurückgespült und regeneriert werden. Die Anlage ermöglicht die bei der Flüssigkeitsbehandlung angewandte Filtergeschwindigkeit (max. 10 m/h) wesentlich überschreitende Filtergeschwindigkeiten (40-60m/h) und deshalb ist ihre Flüssigkeitsbehandlungskapazität im Vergleich zu ihrer Größe wesentlich höher als die der nach ähnlichem Prinzip arbeitenden Anlagen.

Die Anlage ermöglicht die zyklisch erfolgende Zuleitung von Konditionierungsmaterialien.

## Ansprüche

1. Anlage zur kontinuierlichen Flüssigkeitsbehandlung, mit einem zylindrischen Behälter und einem in Zellen aufgeteilten und eine Filterfüllung enthaltenden umlaufenden Filterkorb, wobei der Behälter mit einem Flüssigkeitszuleitungsrohr und einem Flüssigkeitsableitungsrohr sowie einem Spülwasserableitungsrohr versehen ist, dadurch gekennzeichnet. daß der Behälter (1) ein unter Druck stehender Behälter (1) ist, die Zellen (8) des Filterkorbes seitlich und von oben durch Bleche (Platten) begrenzte Räume sind, die unten durch mit Öffnungen versehene Trägerelemente (13) abgeschlossen werden, die Höhe der Filterfüllung (12) kleiner als die Höhe der Zellen (8) ist und die Zellen (8) über einen umlaufenden Verteilerkopf (4) mit dem zentralen Flüssigkeitszuleitungsrohr (2). bzw mit dem Spülwasserableitungsrohr (18) auf die Weise verbunden sind, daß der umlaufende Verteilerkopf (4) aus einem an dem zentralen Flüssigkeitszuleitungsrohr (2) befestigten feststehenden unteren Teil (6) und einem sich an diesen abgedichtet anfügenden umlaufenden oberen Teil (6) bersteht, wobei im unteren Teil in einer der Anzahl der Zellen (8) entsprechenden gleichen Teilung Öffnungen vorgesehen sind und im oberern Teil (6) mit diesen in der Grundstellung bzw. im Falle einer Verdrehung um eine Teilung in Deckung befindliche, sich an diese an die ohere Platte der Zellen (8) angeschlossenen Flüssigkeitsverteilerrohre (7) anschließende Öffnungen vorgesehen sind, wobei zumindest ein Abschnitt des Spülwasserableitungsrohres (18) im Inneren zentralen Flüssigkeitszuleitungsrohres (2) geführt und an eine Öffnung des unteren Teiles (5) des umlaufenden Verteilerkopfes (4) von innen angeschlossen ist.

2. Anlage nach Anspruch 1, dadurch gekennzeichnet. daß der untere und der obere Teil (5, 6) des umlaufenden Verteilerkopfes (4) einen zusammengeschliffenen Kegel bilden, wobei der obere Teil 6 über eine Kupplung (10) an das oben am Behälter (1) vorgesehene Schrittschaltgetriebe (11) angeschlossen ist.

3.Anlage nach Anspruch 1, dadurch gekennzeichnet. daß der untere und der obere Teil (5, 6) des umlaufenden Verteilerkopfes (4) eine Planscheibe bilden, wobei der obere Teil (6) über eine Kupplung (10) an das oben am Behälter (1) vorgesehene Schrittschaltgetriebe (11) angeschlossen ist und zwischen den Scheiben ein Dichtungselement angeordnet ist.

4. Anlage nach Anspruch 2 oder 3, dadurch gekennzeichnet. daß sie mit einer das Behandlungsmaterial zuleitenden Rohrleitung (15) versehen ist, die zumindest auf einem Abschnitt im Inneren des zentralen Flüssigkeitszuleitungsrohres (2) geführt und an die neben dem Spülwasserableitungsrohr (18) liegende Öffnung des unteren Teiles (5) des umlaufenden Verteilerkopfes (4) innen angeschlossen ist.

5. Anlage nach einem der Ansprüche 1 bis 4, dadurch gekennzeichnet. daß der obere Teil der Zellen (8) einen größerern Querschnitt als ihr unterer Teil aufweist.

6. Anlage nach einem der Ansprüche 1 bis 5, dadurch gekennzeichnet, daß die Filterfüllung der Zellen (8) feinkörniger Sand ist.

7. Anlage nach einem der Ansprüche 1 bis 6, dadurch gekennzeichnet. daß das Spülwasserableitungsrohr (18) mit einem Regelventil bzw. einem Strömungsbegrenzer ausgerüstet ist.

8. Anlage nach Anspruch 7, dadurch gekennzeichnet. daß das Regelventil mit einer durch den Druck des Behälters (1) gesteuerten Regeleinheit verbunden ist.

9. Anlage nach Anspruch 7, dadurch gekennzeichnet. daß der Stömungsbegrenzer ein im Spülwasserableitungsrohr (18) oder vor dem Rohr (18) in der Rückspülleitung angeordnetes, eine größere Wichte als reines Wasser, jedoch eine kleinere Wichte als sandiges Wasser aufweisendes Sperrelement ist.

Fig.1

Fig. 2

Fig. 3